# EUROPÄISCHE PATENTSCHRIFT

(11) **EP 1 948 537 B1**
(45) Veröffentlichungstag und Bekanntmachung des Hinweises auf die Patenterteilung: **29.07.2009**
(21) Anmeldenummer: 05794422.5
(22) Anmeldetag: 15.10.2005
(51) Int. Cl.: B65G 15/08, B65G 15/60

(54) **FÖRDERER, INSBESONDERE SCHLAUCHFÖRDERER**
CONVEYOR, IN PARTICULAR, A PIPE CONVEYOR
CONVOYEUR, EN PARTICULIER CONVOYEUR A TUYAU

(43) Veröffentlichungstag der Anmeldung: 30.07.2008
(73) Patentinhaber: FLSMIDTH Koch GmbH, 66787 Wadgassen (DE)
(72) Erfinder: STORCH, Thomas, 2464 Göttlesbrunn (AT)
(74) Vertreter: Bernhardt, Winfrid
(86) Internationale Anmeldenummer: PCT/EP2005/011117
(87) Internationale Veröffentlichungsnummer: WO 2007/045255

(56) Entgegenhaltungen:
- DE-A1- 3 620 906
- DE-A1-8102004 040 19

## Beschreibung

Die Erfindung betrifft einen Förderer, insbesondere Schlauchförderer; mit einem unter Bildung eines hin- und eines zurücklaufenden Trums über Kopf trommeln geführten Fördergurt und zwischen den Kopftrommeln angeordneten Führungen für die Trums.

Durch Benutzung sind Förderer bekannt, siehe z.B. DE 36 20 906 A1, bei denen neben dem hinlaufenden Trum auch der zurücklaufende, untere Trum eine Förderstrecke bildet, so dass unterschiedliches Fördergut in entgegengesetzten Richtungen transportiert werden kann. Während sich das auf dem oberen Trum transportierte Fördergut an der vom Beladeort entfernten Kopftrommel entladen lässt, bedarf es zur Entladung des unteren Trums einer gesonderten Entladestation, in der der Fördergurt zum Abwerfen des Fördergutes in einer Schleife bewegt und ggf. anschließend gereinigt wird, um eine Verschmutzung der Kopf trommeln durch Fördergurt zu vermeiden.

Der vorliegenden Erfindung liegt die Aufgabe zugrunde, einen neuen Förderer der eingangs erwähnten Art zu schaffen, welcher zur Förderung auf zwei Förderstrecken geeignet ist und einen geringeren Bau- und Betriebsaufwand als herkömmliche solche Förderer erfordert.

Der diese Aufgabe lösende Förderer nach der Erfindung ist dadurch gekennzeichnet, dass sich die beiden Trumführungen in horizontaler Projektion kreuzen und der Fördergurt über beide Kopftrommeln von oben nach unten läuft.

Vorteilhaft lassen sich sowohl der hinlaufende Trum als auch der zurücklaufende Trum an der betreffenden Kopftrommel entladen. Eine gesonderte Abwurfschleife entfällt. Der Bauaufwand, welcher erforderlich ist, um die sich in horizontaler Projektion kreuzenden Trumführungen und die Trums an der Kreuzungsstelle aneinander vorbeizuführen, ist deutlich geringer als der Bauaufwand für eine solche Abwurfschleife.

In einer besonders bevorzugten Ausführungsform der Erfindung durchläuft der Fördergurt jeweils in den unteren Abschnitten des hin- und des zurücklaufenden Trums eine Gurtwendestation, die vor einer Beladungsstation angeordnet ist. So ist gesichert, dass für den Rücktransport die gleiche Gurtseite zur Aufnahme des Fördergutes wie beim Hintransport verwendet wird. Verschmutzungen der Führungen und Kopftrommeln durch Fördergut werden vermieden.

Um für den erforderlichen horizontalen Versatz der Führungen bzw. Trums an der Kreuzungsstelle zu sorgen, verläuft wenigstens eine der beiden Führungen gekrümmt. Es versteht sich, dass die Krümmung besonders gering gehalten werden kann, wenn sich die beiden Führungen und Trums gegenseitig ausweichen.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: eine Schemadarstellung eines Schlauchförderers noch der Erfindung,
- Fig. 2: eine Querschnittsansicht einer Förderstrecke des Schlauchförderers von Fig. 1, und
- Fig. 3: mögliche, in dem Förderer von Fig. 1 verwendbare Anordnungen von Trum- führungen in Draufsicht.

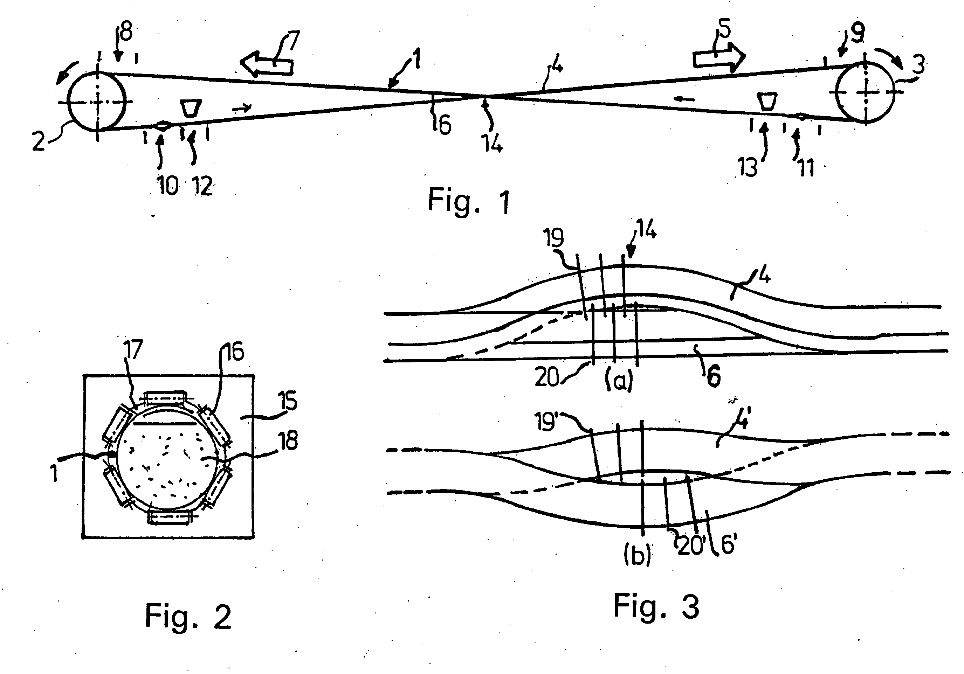

Ein in Fig. 1 schematisch in Seitenansicht dargestellter Schlauchförderer (Pipe conveyor) weist einen endlosen Fördergurt 1 auf, welcher auf Kopftrommeln 2 und 3 umläuft und durch diese angetrieben wird.

Der Fördergurt 1 bildet einen Trum 4, welcher sich gemäß Pfeil 5 in Richtung von der Unterseite der Kopftrommel 2 zu der Oberseite der Kopftrommel 3 bewegt, sowie einen Trum 6, der sich gemäß Pfeil 7 in entgegengesetzter Richtung von der Unterseite der Kopftrommel 3 zur Oberseite der Kopftrommel 2 bewegt. Die Trums 4 und 6 bilden zwei Förderstrecken für unterschiedliche Schüttgüter.

Fig. 2 zeigt den in den Trums 4 und 6 durch eine Führung zu einem Schlauch geformten, Schüttgut 18 transportierenden Fördergurt 1. Trumführungen sind jeweils durch eine Reihenanordnung von Halterahmen 15 gebildet, an denen, um eine Öffnung 17 herum verteilt, Stützrollen 16 angebracht sind.

Bei den Trommeln 2 und 3 sind Gurtöffnungsstrecken 8 und 9 angeordnet, in denen der zu einem Schlauch geformte Fördergurt 1 in eine zur Umspannung der Kopftrommel geeignete Bandform überführt wird.

Im jeweils unteren Abschnitt der Trums 4 und 6 ist eine Gurtwendestrecke 10 bzw. 11 vorgesehen. In den Wendestrecken wird der Fördergurt mit Hilfe einer (nicht gezeigten) Rollenanordnung um 180° gedreht. In Förderrichtung schließt sich an die Gurtwendestrecke 10 und 11 jeweils eine Belade- und Schlauchbildungsstrecke 12 bzw. 13 an.

Wie Fig. 1 erkennen lässt, kreuzen sich bei 14, in Richtung der Kopftrommelachsen gesehen, der Trum 4 und der Trum 6.

Gemäß Fig. 3a kann der Trum 4 durch eine bei 19 angedeutete Führung an der Kreuzungsstelle 14 auf einem gekrümmten Weg an dem Trum 6 bzw. dessen Führung 20 vorbeigeführt werden. Gemäß Fig. 3b können durch entsprechende Führungen 19' und 20' auch beide Trums 4 und 6 gekrümmt aneinander vorbeigeführt sein.

An der Belade- und Schlauchbildungsstrecke 12 auf den Trum 6 geladenes Schüttgut wird an der Kopftrommel 3 entladen, wobei das Fördergut von dem bei 9 geöffneten Fördergurt 1 abfällt. Der Fördergurt wird dann in der Gurtwendestation 11 um 180° gedreht und kann erneut mit in entgegengesetzter Richtung zu transportierendem Schüttgut anderer Art in der Belade- und Schlauchbildungsstrecke 13 beladen werden.

Vorteilhaft erfolgt die Beladung jeweils am unteren Abschnitt der Trums, welcher leicht zugänglich ist. Durch die Wendung des Gurts bedarf es keiner Gurtreinigung, es sei denn Schüttgutreste des auf dem Trum 4 transportierten Schüttguts dürften nicht mit dem auf dem Trum 6 transportierten Fördergut vermischt werden.

## Patentansprüche

1. Förderer, insbesondere Schlaüchförderer, mit einem unter Bildung eines hin- und eines zurücklaufenden Trums (4,6) über Kopftrommeln (2,3) geführten Fördergurt (1) und zwischen den Kopftrommeln (2,3) angeordneten Führungen (19 ,20) für die Trums (4,6),
**dadurch gekennzeichnet,**
**dass** sich die beiden Trumführungen (19 ,20) in horizontaler Projektion kreuzen und der Fördergurt (1) über beide Kopftrommeln (2,3) von oben nach unten läuft.

2. Förderer nach Anspruch 1,
**dadurch gekennzeichnet,**
**dass** in den unteren Abschnitten des hin- und des zurücklaufenden Trums (4,6) der Fördergurt (1) jeweils eine Gurtwendestrecke (10, 11), die vor einer Beladestation (12,13) angeordnet ist, durchläuft.

3. Förderer nach Anspruch 1 oder 2,
**dadurch gekennzeichnet,**
**dass** eine oder beide Führungen (19,20;19',20') des Trums (4,6) gekrümmt verlaufen, um an der Kreuzungsstelle (14) für den erforderlichen horizontalen Versatz der Führungen zu sorgen bzw. Trums (4,6) zu sorgen.

## Claims

1. Conveyor, in particular pipe conveyor, having a conveying belt (1), which is guided over head drums (2, 3) to form a forward and a return strand (4, 6), and guides (19, 20) for the strands (4, 6), the guides being arranged between the head drums (2, 3), **characterized in that** the two strand guides (19, 20), as seen in horizontal projection, cross over and the conveying belt (1) runs from top to bottom over the two head drums (2, 3).

2. Conveyor according to Claim 1, **characterized in that**, in the bottom portions of the forward and of the return strand (4, 6), the conveying belt (1) runs through a respective belt-turning section (10, 11), which is arranged upstream of a loading station (12, 13).

3. Conveyor according to Claim 1 or 2, **characterized in that** one or both guides (19, 20; 19', 20') of the strand (4, 6) is/are curved, in order to ensure the necessary horizontal offsetting of the guides or strands (4, 6) at the crossover location (14).

## Revendications

1. Convoyeur, en particulier convoyeur à tuyau, avec une courroie transporteuse (1) guidée sur des tambours de tête (2,3) en formant un brin (4, 6) animé d'un mouvement de va-et-vient et des dispositifs de guidage (19, 20) disposés entre les tambours de tête (2, 3) pour les brins (4, 6), **caractérisé en ce que** les deux dispositifs de guidage (19, 20) se croisent en projection horizontale et la courroie transporteuse (1) passe du haut vers le bas sur les deux tambours de tête (2, 3).

2. Convoyeur selon la revendication 1, **caractérisé**
**en ce que** dans les sections inférieures du brin (4,6) animé d'un mouvement de va-et-vient, la courroie transporteuse (1) passe à chaque fois dans une zone de retournement de la courroie (10,11), qui est disposée en amont d'un poste de chargement (12, 13).

3. Convoyeur selon la revendication 1 ou 2, **caractérisé**
**en ce qu'**un ou les deux dispositifs de guidage (19,20 ;19',20') du brin (4,6) s'étendent de manière courbée pour assurer au niveau du croisement (14) le décalage horizontal nécessaire des dispositifs de guidage ou du brin (4,6).
